# FASCICULE DE BREVET EUROPEEN

(11) **EP 1 692 382 B1**
(45) Date de publication et mention de la délivrance du brevet: **31.08.2016**
(21) Numéro de dépôt: 04805866.3
(22) Date de dépôt: 29.11.2004
(51) Int. Cl.: F02D 41/02, F02D 41/00

(54) **PROCEDE DE REGULATION DE TEMPERATURE A CONVERGENCE RAPIDE POUR LA REGENERATION D UN FILTRE A PARTICULES, ET DISPOSITIF POUR S A MISE EN OEUVRE**
VERFAHREN ZUR STEUERUNG EINER SCHNELLKONVERGENZTEMPERATUR ZUR REGENERATION EINES TEILCHENFILTERS UND VORRICHTUNG ZUR DURCHFÜHRUNG DES VERFAHRENS
METHOD FOR CONTROLLING A RAPID CONVERGENCE TEMPERATURE FOR REGENERATING A PARTICLE FILTER AND DEVICE FOR CARRYING OUT SAID METHOD

(30) Priorité: 02.12.2003 FR 0314143
(43) Date de publication de la demande: 23.08.2006
(73) Titulaire: Renault SAS, 92100 Boulogne Billancourt (FR)
(72) Inventeur: DANEAU, Marc, F-92100 Boulogne Billancourt (FR); MORENO, Eduard, F-92800 Puteaux (FR); PILLOT, Adrien, F-91290 Arpajon (FR)
(86) Numéro de dépôt international: PCT/FR2004/050626
(87) Numéro de publication internationale: WO 2005/056997

(56) Documents cités:
- FR-A- 2 804 171
- US-A- 5 050 376

## Description

L'invention concerne, de façon générale, la motorisation de véhicules automobiles et le respect de l'environnement.

Plus précisément, l'invention concerne, selon un premier aspect, un procédé de régulation de température pour la régénération d'un filtre à particules équipant un circuit d'échappement d'un moteur à combustion interne et à injection de carburant, alimenté en comburant par une turbine, ce procédé comprenant des opérations consistant à produire une consigne de température d'entrée du filtre, à produire une mesure ou une évaluation de la température d'entrée du filtre, à produire une mesure ou une évaluation de la température en amont de la turbine, et à produire, en fonction au moins d'un écart entre la consigne de température d'entrée du filtre et la mesure ou une évaluation de cette température d'entrée du filtre, une première variable d'action agissant sur au moins un paramètre de l'injection dans un sens propre à réduire cet écart.

Un filtre à particules inséré dans le circuit d'échappement des gaz d'un moteur thermique est un moyen connu pour éliminer les particules de suie contenues dans ces gaz et pour diminuer ainsi les émissions indésirables d'un tel moteur.

Pour assurer le fonctionnement satisfaisant d'un filtre à particules et éviter son colmatage par les suies, ce qui dégraderait les performances du moteur, il est nécessaire de procéder périodiquement à une régénération qui consiste à brûler les suies, la combustion de ces suies étant provoquée par une élévation de la température des gaz d'échappement en entrée du filtre à particules.

La régénération du filtre à particules requiert ainsi une très bonne maîtrise de la température des gaz d'échappement en entrée de ce filtre.

En effet, la vitesse de régénération augmente rapidement lorsque la température en entrée du filtre augmente. Corrélativement, la durée de la régénération du filtre pour une masse initiale donnée de particules diminue rapidement lorsque la température en entrée du filtre augmente. Cependant, comme une combustion trop rapide des particules provoque, au sein du filtre, un gradient de température très important, la vitesse de régénération du filtre est limitée par la résistance mécanique de ce dernier.

D'autre part, le profil de roulage du véhicule influence fortement la température en entrée du filtre à particules. Plus précisément, lorsque le conducteur du véhicule freine ou ralentit, la coupure de l'injection de carburant provoque une chute de la température en entrée du filtre, alors que cette température augmente rapidement lorsque le conducteur accélère.

Un procédé conforme au préambule ci-dessus est décrit dans le document de brevet FR 2 804 171. Un procédé voisin est décrit dans le document de brevet FR2 811 370. Selon le procédé connu de ce second document, une régulation de température est réalisée en amont de la turbine, par action sur l'un au moins des paramètres d'injection que constituent l'avance de l'injection principale, le débit de post-injection rapprochée, et l'avance de post-injection rapprochée, dans le but de permettre à la turbine de fonctionner à sa limite mécanique dans certaines situations.

Selon ce procédé connu, une autre régulation de température, indépendante de la première, est réalisée en entrée du filtre à particules, par action sur l'un au moins des paramètres d'injection que constituent le débit de post-injection éloignée, et l'avance de l'injection éloignée.

Dans ce contexte, l'invention a pour but de proposer un procédé permettant, dans certaines zones de fonctionnement du moteur, de réaliser une régulation de température en entrée du filtre dont le temps d'établissement soit plus court que celui auquel conduit la mise en oeuvre du procédé connu.

A cette fin, le procédé de l'invention, par ailleurs conforme à la définition générique qu'en donne le préambule ci-dessus, est essentiellement caractérisé en ce qu'il comprend en outre une opération consistant à produire une consigne de température en amont de la turbine, une opération consistant à élaborer un signal d'erreur représenté par une première fonction de l'écart entre la consigne et la mesure ou l'évaluation de la température à l'entrée du filtre, et une opération consistant à élaborer la première variable d'action par application d'une seconde fonction de l'écart entre la mesure ou l'évaluation de la température en amont de la turbine et la somme du signal d'erreur et de la consigne de la température en amont de la turbine.

L'invention concerne également un dispositif adapté à la mise en oeuvre d'un procédé de régulation de température pour la régénération d'un filtre à particules équipant un circuit d'échappement d'un moteur à combustion interne et à injection de carburant, alimenté en comburant par une turbine, ce dispositif comprenant au moins un premier capteur de température monté en amont de la turbine et délivrant un premier signal de mesure correspondant, un second capteur de température monté à l'entrée du filtre à particules et délivrant un second signal de mesure correspondant, et un module de régulation délivrant en fonctionnement une première variable d'action agissant sur au moins un paramètre de l'injection, ce dispositif étant caractérisé en ce que les premier et second capteurs de température sont tous deux reliés audit module de régulation, auquel ils délivrent respectivement les premier et second signaux de mesure.

D'autres caractéristiques et avantages de l'invention ressortiront clairement de la description qui en est faite ci-après, à titre indicatif et nullement limitatif, en référence aux dessins annexés, dans lesquels :
- la figure 1 est un schéma fonctionnel du procédé de l'invention ;
- la figure 2 est un graphe illustrant une relation, observable dans la mise en oeuvre de l'invention, entre une variable d'action et la mesure de la température en amont de la turbine ;
- la figure 3 est un graphe illustrant une relation, observable dans la mise en oeuvre de l'invention, entre la mesure de la température à l'entrée du filtre à particules et la mesure de la température en amont de la turbine ; et
- la figure 4 est un schéma d'un dispositif de mise en oeuvre de l'invention dans son contexte fonctionnel.

Comme annoncé précédemment, 1 l'invention concerne de façon générale la motorisation de véhicules automobiles et notamment la maîtrise des particules de suie émises par un moteur MOT à combustion interne et à injection de carburant.

Un tel moteur dispose de façon connue d'un circuit d'admission ADM et d'un circuit d'échappement ECH, le circuit d'admission étant alimenté en comburant sous pression par l'intermédiaire d'un turbocompresseur dont la turbine TUR est installée sur le circuit d'échappement.

Sur le circuit d'échappement ECH sont en outre installés d'une part un catalyseur d'oxydation OX permettant de faire réagir les hydrocarbures imbrûlés et le monoxyde de carbone issus de la post-injection éloignée pour provoquer une réaction exothermique, et un filtre à particules FAP destiné à retenir les particules de suie.

Cet ensemble comprend par ailleurs un premier capteur de température 1 monté en amont de la turbine et délivrant un premier signal de mesure de température MTam, et un second capteur de température monté à l'entrée du filtre à particules FAP et délivrant un second signal de mesure de température Mtef.

Dans ce contexte, le procédé de l'invention vise à assurer de façon optimale la régulation de température du filtre à particules FAP en vue de sa régénération.

Outre la production du signal de mesure ou d'évaluation Mef de la température d'entrée du filtre FAP et la production du signal de mesure ou d'évaluation Mtam de la température en amont de la turbine, le procédé de l'invention comprend des opérations connues consistant à produire une consigne Kef de température d'entrée du filtre, une consigne KTam de température en amont de la turbine, et une première variable d'action VA1 agissant sur au moins un paramètre d'injection du carburant dans le moteur MOT dans un sens propre à réduire l'écart entre l'un au moins des signaux de mesure de température et la consigne correspondante.

Dans le procédé selon l'invention, ces opérations sont mises en oeuvre dans un module de régulation REG, auquel les capteurs de température 1 et 2 sont reliés et fournissent les signaux de mesure Mtam et Mef, et qui délivre lui-même la variable d'action Va1.

Ce module REG comprend un premier soustracteur D1 évaluant l'écart entre la consigne KTef et la mesure MTef, un premier générateur de fonction F1 élaborant un signal d'erreur Serr représenté par une première fonction f1 de ce premier écart, un sommateur S1 élaborant la somme du signal d'erreur Serr et de la consigne KTam, un second soustracteur D2 évaluant l'écart entre la mesure MTam et la somme du signal d'erreur Serr et de la consigne KTam, et un second générateur de fonction F2 élaborant la variable d'action VA1 en tant que seconde fonction f2 de ce second écart.

De préférence, la variable d'action VA1 modifie l'un au moins des paramètres d'injection que constituent l'avance de l'injection principale, le débit de post-injection rapprochée, et l'avance de post-injection rapprochée.

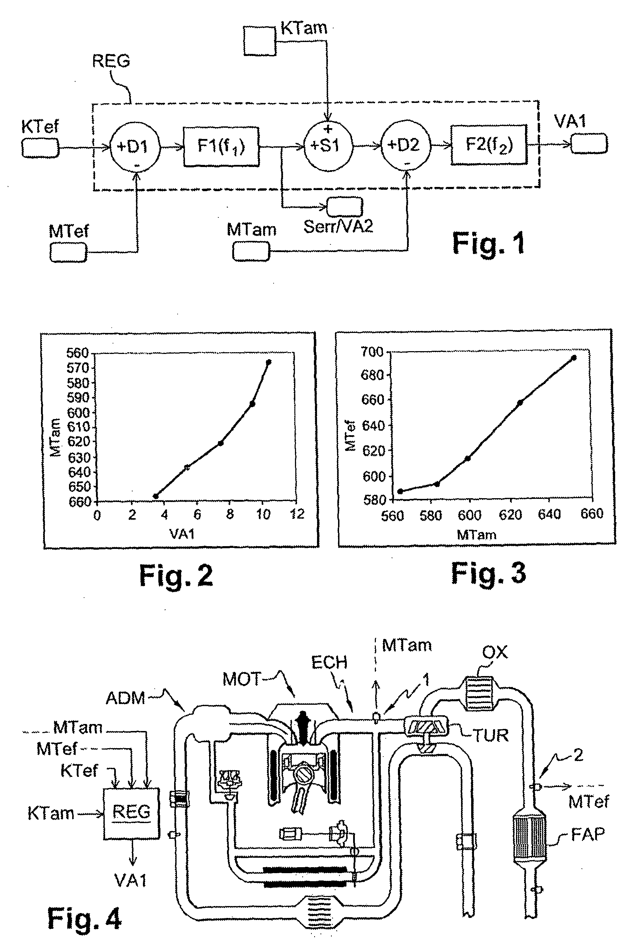

L'agencement décrit permet ainsi de tirer avantage de la rapidité des variables d'action de la régulation en amont de la turbine TUR pour la régulation de température à l'entrée du filtre FAP.
Pour obtenir un fonctionnement optimal du procédé de l'invention, la variable d'action VA1 choisie doit agir de manière monotone et proportionnelle à la fois sur la température en amont de la turbine TUR et sur la température en entrée du filtre FAP, comme le montrent les figures 2 et 3, cette monotonie étant obtenue lors de la mise au point du réglage de base du moteur MOT.

Dans le cas où le signal d'erreur Serr prend une valeur non nulle en régime de régulation établi par la première variable d'action VA1, le procédé de l'invention peut comprendre une opération supplémentaire consistant à utiliser le signal d'erreur Serr en tant que seconde variable d'action VA2 pour agir sur l'un au moins des paramètres d'injection que constituent le débit de post-injection éloignée et l'avance de l'injection éloignée. Cette correction, dont le temps de réponse est plus élevé, permet principalement de compenser les dispersions d'un moteur à l'autre.

Lorsque le module de régulation REG est arrêté pour quelque raison que ce soit, ou lorsque le système quitte des conditions de régime établi, les corrections effectuées sont conservées, par exemple par mémorisation de la valeur de leur partie intégrale.

## Revendications

1. Procédé de régulation de température pour la régénération d'un filtre à particules (FAP) équipant un circuit d'échappement (ECH) d'un moteur (MOT) à combustion interne et à injection de carburant, alimenté en comburant par une turbine (TUR), ce procédé comprenant des opérations consistant à produire une consigne (KTef) de température d'entrée du filtre, à produire une mesure (MTef) ou une évaluation de la température d'entrée du filtre, à produire une mesure (MTam) ou une évaluation de la température en amont de la turbine, et à produire, en fonction au moins d'un écart entre la consigne de température d'entrée du filtre et la mesure ou une évaluation de cette température d'entrée du filtre, une première variable d'action (VA1) agissant sur au moins un paramètre de l'injection dans un sens propre à réduire cet écart, **caractérisé en ce qu'**il comprend en outre une opération consistant à produire une consigne (KTam) de température en amont de la turbine, une opération consistant à élaborer un signal d'erreur (Serr) représenté par une première fonction (f1) de l'écart entre la consigne (KTef) et la mesure (MTef) ou l'évaluation de la température à l'entrée du filtre, et une opération consistant à élaborer la première variable d'action (VA1) par application d'une seconde fonction (f2) de l'écart entre la mesure (MTam) ou l'évaluation de la température en amont de la turbine et la somme du signal d'erreur (Serr) et de la consigne (KTam) de la température en amont de la turbine.

2. Procédé suivant la revendication 1, **caractérisé en ce que** la première variable d'action (VA1) modifie l'un au moins des paramètres d'injection que constituent l'avance de l'injection principale, le débit de post-injection rapprochée, et l'avance de post-injection rapprochée.

3. Procédé suivant la revendication 1 ou 2, **caractérisé en ce qu'**il comprend une opération consistant à utiliser le signal d'erreur (Serr) en tant que seconde variable d'action (VA2) dans le cas où ce signal d'erreur (Serr) prend une valeur non nulle en régime de régulation établi par la première variable d'action (VA1).

4. Dispositif adapté à la mise en oeuvre d'un procédé suivant la revendication 1 de régulation de température pour la régénération d'un filtre à particules (FAP) équipant un circuit d'échappement (ECH) d'un moteur (MOT) à combustion interne et à injection de carburant, alimenté en comburant par un compresseur entraîné par une turbine (TUR), ce dispositif comprenant au moins un premier capteur de température (1) monté en amont de la turbine et délivrant un premier signal de mesure correspondant (MTam), un second capteur de température monté à l'entrée du filtre à particules (FAP) et délivrant un second signal de mesure correspondant (MTef), et un module de régulation (REG) délivrant en fonctionnement une première variable d'action (VA1) agissant sur au moins un paramètre de l'injection, **caractérisé en ce que** les premier et second capteurs de température (1, 2) sont tous deux reliés au dit module de régulation (REG), auquel ils délivrent respectivement les premier et second signaux de mesure.

## Patentansprüche

1. Verfahren zur Temperaturregulierung für die Regeneration eines Teilchenfilters (FAP), das eine Abgasanlage (ECH) einer Brennkraftmaschine (MOT) mit Kraftstoffeinspritzung ausstattet, der mit einem Verbrennungsförderer von einer Turbine (TUR) versorgt wird, wobei das Verfahren Vorgänge umfasst, die darin bestehen, eine Eingangssolltemperatur (KTef) des Filters zu erzeugen, eine Messung (MTef) oder eine Bewertung der Eingangstemperatur des Filters zu erzeugen, eine Messung (MTam) oder eine Bewertung der Temperatur stromaufwärts der Turbine zu erzeugen, und in Abhängigkeit von mindestens einem Unterschied zwischen dem Eingangstemperatursollwert des Filters und der Messung oder einer Bewertung dieser Eingangstemperatur des Filters eine erste Aktionsvariable (VA1) zu erzeugen, die auf mindestens einen Parameter der Einspritzung in eine Richtung einwirkt, die geeignet ist, diesen Unterschied zu verringern, **dadurch gekennzeichnet, dass** es außerdem einen Vorgang umfasst, der darin besteht, einen Temperatursollwert (KTam) stromaufwärts der Turbine zu erzeugen, einen Vorgang, der darin besteht, ein Fehlersignal (Serr) zu ermitteln, das durch eine erste Funktion (f1) des Unterschieds zwischen dem Sollwert (KTef) und der Messung (MTef) oder der Bewertung der Eingangstemperatur des Filters dargestellt ist, und einen Vorgang, der darin besteht, die erste Aktionsvariable (VA1) durch Anwenden einer zweiten Funktion (f2) des Unterschieds zwischen der Messung (MTam) oder der Bewertung der Temperatur stromaufwärts der Turbine und der Summe des Fehlersignals (Serr) und dem Sollwert (KTam) der Temperatur stromaufwärts der Turbine zu ermitteln.

2. Verfahren nach Anspruch 1, **dadurch gekennzeichnet, dass** die erste Aktionsvariable (VA1) den mindestens einen der Einspritzungsparameter, die die Vorverstellung der Haupteinspritzung, den angenäherten Nacheinspritzungsdurchfluss und die angenäherte Nacheinspritzungsvorverstellung darstellen, ändert.

3. Verfahren nach Anspruch 1 oder 2, **dadurch gekennzeichnet, dass** es einen Vorgang umfasst, der darin besteht, das Fehlersignal (Serr) als zweite Aktionsvariable (VA2) in dem Fall zu verwenden, indem dieses Fehlersignal (Serr) einen Wert nicht gleich null beim Regulieren, der von der ersten Aktionsvariablen (VA1) ermittelt wird, annimmt.

4. Vorrichtung, die an die Umsetzung eines Verfahrens nach Anspruch 1 zur Temperaturregulierung für die Regeneration eines Teilchenfilters (FAP), das eine Abgasanlage (ECH) einer Brennkraftmaschine (MOT) mit Kraftstoffeinspritzung ausstattet, angepasst ist, der mit Verbrennungsförderer durch einen Verdichter versorgt wird, der von einer Turbine (TUR) angetrieben wird, wobei diese Vorrichtung mindestens einen ersten Temperatursensor (1) umfasst, der stromaufwärts der Turbine installiert ist und ein erstes entsprechendes Messsignal (MTam) liefert, einen zweiten Temperatursensor, der an dem Eingang des Teilchenfilters (FAP) installiert ist und ein zweites entsprechendes Messsignal (MTef) liefert, und ein Regulierungsmodul (REG), das im Betrieb eine erste Aktionsvariable (VA1) liefert, die auf mindestens einen Parameter der Einspritzung einwirkt, **dadurch gekennzeichnet, dass** der erste und der zweite Temperatursensor (1, 2) beide mit dem Regulierungsmodul (REG), an das sie jeweils das erste und das zweite Messsignal liefern, verbunden sind.

## Claims

1. Method for regulating the temperature for the regeneration of a particulate filter (FAP) fitted to an exhaust circuit (ECH) of a fuel-injected internal combustion engine (MOT), supplied with oxidant by a turbine (TUR), this method involving operations consisting in producing a filter inlet temperature setpoint (KTef), producing a measurement (MTef) or evaluation of the filter inlet temperature, producing a measurement (MTam) or an evaluation of the temperature upstream of the turbine, and producing, on the basis of at least one discrepancy between the filter inlet temperature setpoint and the measurement or evaluation of this filter inlet temperature, a first action variable (VA1) acting on at least one injection parameter in a direction capable of reducing this discrepancy, **characterized in that** it further comprises an operation involving producing a setpoint (KTam) for the temperature upstream of the turbine, an operation involving formulating an error signal (Serr) represented by a first function (f1) of the discrepancy between the setpoint (KTef) and the measurement (MTef) or the evaluation of the filter inlet temperature, and an operation involving formulating the first action variable (VA1) by applying a second function (f2) of the discrepancy between the measurement (MTam) or the evaluation of the temperature upstream of the turbine and the sum of the error signal (Serr) and of the setpoint (KTam) of the temperature upstream of the turbine.

2. Method according to Claim 1, **characterized in that** the first action variable (VA1) modifies at least one of the injection parameters that are the injection advance of the main injection, the early post-injection flow rate and the early post-injection advance.

3. Method according to Claim 1 or 2, **characterized in that** it comprises an operation involving using the error signal (Serr) as a second action variable (VA2) if this error signal (Serr) adopts a non-zero value during a regulation regime established by the first action variable (VA1).

4. Device suited to implement a method according to Claim 1 for regulating the temperature for the regeneration of a particulate filter (FAP) fitted to an exhaust circuit (ECH) of a fuel-injected internal combustion engine (MOT) supplied with oxidant by a compressor driven by a turbine (TUR), this device comprising at least one first temperature sensor (1) mounted upstream of the turbine and delivering a first corresponding measurement signal (MTam), a second temperature sensor mounted at the inlet of the particulate filter (FAP) and delivering a corresponding second measurement signal (MTef), and a regulation module (REG) delivering, in operation, a first action variable (VA1) acting on at least one parameter of the injection, **characterized in that** the first and second temperature sensors (1, 2) are both connected to the said regulation module (REG) to which they respectively deliver the first and second measurement signals.
